# EUROPEAN PATENT APPLICATION

(11) **EP 3 597 954 A1**
(43) Date of publication of application: **22.01.2020**
(21) Application number: 19180992.0
(22) Date of filing: 18.06.2019
(51) Int. Cl.: F16D 25/08, F16D 48/02, F16D 29/00, F16D 48/06

(54) **CONNECTING AND DISCONNECTING DEVICE OF CLUTCH**

(30) Priority: 03.07.2018 JP 2018127154
(71) Applicant: TOYOTA JIDOSHA KABUSHIKI KAISHA, Toyota-Shi, Aichi-Ken 471-8571 (JP)
(72) Inventor: KITAI, Shinya, Aichi-ken 471-8571 (JP)
(74) Representative: D Young & Co LLP

(57) **Abstract**

A connecting and disconnecting device (10) of a clutch includes a clutch pedal (50), a clutch cylinder (54), a depressing force transmission mechanism (60), and an actuator (48; 202). The depressing force transmission mechanism (60) includes a separation mechanism (56; 200) that connects and disconnects a depressing force transmission path of the depressing force transmission mechanism (60), the separation mechanism (56; 200) includes an input piston (66) to which the depressing force from the clutch pedal (50) is input, an output piston (68) for outputting a clutch operating hydraulic pressure to the clutch cylinder (54), a first oil chamber (104) provided between the input piston (66) and the output piston (68), and an electromagnetic valve (118) provided to make a connection or disconnection between the first oil chamber (104) and a reservoir tank (116) connected to the first oil chamber (104), and the actuator (48; 202) is connected to transmit power to the output piston (68) of the separation mechanism (56; 200).

## Description

### BACKGROUND OF THE INVENTION

### 1. Field of the Invention

The invention relates to a connecting and disconnecting device of a clutch capable of being connected and disconnected through a clutch pedal depressing operation by a driver and driving of an actuator.

### 2. Description of Related Art

In a connecting and disconnecting mechanism of a clutch in which the clutch is connected and disconnected based on an operation amount of a clutch pedal, a structure in which the clutch can be connected and disconnected by an actuator without operating the clutch pedal has been proposed. As an example, there is a clutch operation device disclosed in Japanese Unexamined Patent Application Publication (Translation of PCT Application) No. 2017-509848 (JP 2017-509848 A). In JP 2017-509848 A, a valve is provided in a pressure line connecting a master cylinder and a slave cylinder, an actuator is provided in parallel with the pressure line, and an operation mode of a clutch is switched by opening and closing of the valve. For example, in a case where the valve is closed, the clutch can be connected and disconnected by the actuator.

### SUMMARY OF THE INVENTION

Incidentally, in the clutch operation device of JP 2017-509848 A, since the actuator is provided in parallel with the pressure line, although it is possible to disconnect the clutch by driving the actuator during traveling, it is not possible to drive the actuator at the time of an operation of the clutch pedal. In contrast, when the actuator can be driven during the operation of the clutch pedal, it becomes possible to execute assistance by the actuator during the operation of the clutch pedal. However, in a case where the clutch pedal is depressed in a transition period of connection and disconnection of the clutch by driving of the actuator, a pedal reaction force that is applied to the clutch pedal changes according to the driving states of the clutch pedal and the actuator, whereby there is a possibility that a driver may feel a sense of discomfort.

The invention provides a connecting and disconnecting device of a clutch, which is configured to be able to connect and disconnect the clutch by an actuator and can be assisted by the actuator during an operation of a clutch pedal, and in which even in a case where the clutch pedal is depressed in a transition period of connection and disconnection of the clutch by the actuator, a change in pedal reaction force is restrained.

An aspect of the invention relates to a connecting and disconnecting device of a clutch. The connecting and disconnecting device includes a clutch pedal configured to be operated by a driver, a clutch cylinder, a depressing force transmission mechanism configured to transmit a depressing force, with which the clutch pedal is depressed, to the clutch cylinder, and an actuator configured to generate power for connecting and disconnecting the clutch through the depressing force transmission mechanism. The depressing force transmission mechanism includes a separation mechanism that connects and disconnects a depressing force transmission path of the depressing force transmission mechanism, the separation mechanism includes an input piston to which the depressing force from the clutch pedal is input, an output piston that outputs a clutch operating hydraulic pressure to the clutch cylinder, a first oil chamber provided between the input piston and the output piston, and an electromagnetic valve provided to make a connection or disconnection between the first oil chamber and a reservoir tank connected to the first oil chamber, and the actuator is connected to transmit power to the output piston of the separation mechanism.

The connecting and disconnecting device according to the aspect of the invention may further include an electronic control unit configured to control the actuator and the electromagnetic valve. The electronic control unit may be configured to control the electromagnetic valve such that the first oil chamber and the reservoir tank are connected to each other in a transition period in which the output piston is moved by controlling the actuator.

In the connecting and disconnecting device according to the aspect of the invention, the actuator may include an electric actuator, and the electronic control unit may be configured to control the electromagnetic valve such that the first oil chamber and the reservoir tank are disconnected from each other in a case where the output piston has moved to a disconnection position of the clutch by controlling the actuator.

In the connecting and disconnecting device according to the aspect of the invention, the electromagnetic valve may be a normally closed electromagnetic valve.

In the connecting and disconnecting device according to the aspect of the invention, the first oil chamber may be connected to a reservoir tank through a relief valve, and the relief valve may be configured to connect the first oil chamber and the reservoir tank in a case where hydraulic pressure larger than a hydraulic pressure value of when a maximum reaction force of the clutch pedal is generated is generated in the first oil chamber.

In the connecting and disconnecting device according to the aspect of the invention, the actuator may include an electric motor, a screw transmission device, a hydraulic cylinder, and a second oil chamber, the screw transmission device may be configured to convert rotary motion of the electric motor into linear motion, the screw transmission device may be connected to drive the hydraulic cylinder, the second oil chamber may be disposed at a position adjacent to the output piston to press the output piston in a disconnecting direction of the clutch by hydraulic oil that is supplied to the second oil chamber, and the second oil chamber may be configured such that hydraulic oil that is discharged from the hydraulic cylinder flows into the second oil chamber.

In the connecting and disconnecting device according to the aspect of the invention, the actuator may include an electric motor and a screw transmission device, the screw transmission device may be configured to convert rotary motion of the electric motor into linear motion, and the screw transmission device may be connected to the output piston to transmit power to the output piston.

In the connecting and disconnecting device according to the aspect of the invention, a spring that biases the input piston in a direction in which depression of the clutch pedal is released may be disposed in the first oil chamber.

According to the aspect of the invention, by switching the connection and disconnection between the first oil chamber and the reservoir tank by the electromagnetic valve, it becomes possible to switch transmission of the depressing force between the input piston and the output piston. For example, in a transition period of depression of the clutch pedal, the first oil chamber and the reservoir tank are disconnected from each other by the electromagnetic valve, whereby the first oil chamber is hermetically sealed, and thus the depressing force can be transmitted between the input piston and the output piston through the hydraulic oil in the first oil chamber. In this way, the depressing force of the clutch pedal is transmitted to the output piston through the input piston and the first oil chamber. In the transition period of depression of the clutch pedal, the power of the actuator is transmitted to the output piston, whereby it is possible to assist in the connection and disconnection of the clutch by the actuator.

In the transition period of connection and disconnection of the clutch by the actuator, the first oil chamber and the reservoir tank are connected to each other by the electromagnetic valve, whereby the hydraulic pressure in the first oil chamber is released, and thus the transmission of the depressing force between the input piston and the output piston is interrupted. Therefore, it is possible to connect and disconnect the clutch by moving the output piston by the actuator without affecting the input piston. Even in a case where the clutch pedal is depressed in the transition period of connection and disconnection of the clutch by the actuator, the transmission of the depressing force between the input piston and the output piston is interrupted, whereby a change in the pedal reaction force of the clutch pedal in the transition period of depression of the clutch pedal is restrained.

According to the aspect of the invention, the first oil chamber and the reservoir tank are connected to each other by the electromagnetic valve in the transition period in which the output piston is moved by the actuator, and therefore, the transmission of the depressing force between the input piston and the output piston is interrupted. Therefore, even in a case where the clutch pedal is depressed in the transition period in which the output piston is moved by the actuator, a change in the pedal reaction force of the clutch pedal is restrained.

According to the aspect of the invention, when the output piston moves to the disconnection position of the clutch by the actuator, the first oil chamber and the reservoir tank are disconnected from each other by the electromagnetic valve, and therefore, the first oil chamber between the input piston and the output piston is hermetically sealed, and thus even in a state where the energization of the actuator is cut off, it is possible to hold the output piston at the disconnection position of the clutch. Accordingly, since the output piston is not held by driving of the actuator, electric power consumption is reduced.

According to the aspect of the invention, the electromagnetic valve is a normally closed type, and therefore, in a case where a failure of a power supply system in which electric power is not supplied to the actuator and electromagnetic valve occurs in the transition period of depression of the clutch pedal, the electromagnetic valve is closed to disconnect between the first oil chamber and the reservoir tank. Therefore, in a case where the power supply system fails in the transition period of depression of the clutch pedal, although assistance by the actuator is stopped, traveling by the operation of the clutch pedal becomes possible. Even in a case where the power supply system fails during the movement of the output piston by the actuator, the electromagnetic valve is closed, whereby the output piston is locked by the hydraulic oil in the first oil chamber. Therefore, it is possible to restrain sudden engagement of the clutch due to the failure.

According to the aspect of the invention, when the power supply system fails in the transition period when the output piston is moved by the actuator, in a case where the first oil chamber and the reservoir tank are disconnected from each other by the electromagnetic valve, the hydraulic oil in the first oil chamber flows into the reservoir tank through the relief valve by strongly depressing the clutch pedal such that hydraulic pressure larger than the hydraulic pressure value of when the maximum reaction force of the clutch pedal is generated is generated, and therefore, it is possible to release the lock of the output piston.

According to the aspect of the invention, the hydraulic oil that is discharged from the hydraulic cylinder is supplied to the second oil chamber, whereby it is possible to apply a force acting in a clutch disconnecting direction to the output piston in the transition period of depression of the clutch pedal by the hydraulic pressure of the hydraulic oil in the second oil chamber, or to automatically move the output piston in the clutch disconnecting direction.

According to the aspect of the invention, the rotary motion of the electric motor is converted into linear motion by the screw transmission device, whereby it is possible to move the output piston by the electric motor. Accordingly, it is possible to apply a force acting in the clutch disconnecting direction to the output piston in the transition period of depression of the clutch pedal by controlling the electric motor, or to automatically move the output piston in the clutch disconnecting direction.

According to the aspect of the invention, it is possible to generate the pedal reaction force when the driver depresses the clutch pedal, by the biasing force of the spring provided in the first oil chamber.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a diagram showing the overall structure of a connecting and disconnecting device of a clutch to which the invention is applied;
FIG. 2 is an enlarged view of a separation mechanism of FIG. 1;
FIG. 3 is a diagram showing the operation states of a separation mechanism and a master cylinder during normal traveling;
FIG. 4 is a diagram showing the operation states of the separation mechanism and the master cylinder during automatic control;
FIG. 5 is a diagram showing the operation states of the separation mechanism and the master cylinder when an output piston has moved to a clutch disconnection position by automatic control where the clutch is disconnected;
FIG. 6 is a diagram showing the operation states of the separation mechanism and the master cylinder when coasting establishment conditions are not satisfied in a state where the output piston has moved to the clutch disconnection position by automatic control;
FIG. 7 is a diagram showing the operation states of the separation mechanism and the master cylinder when a clutch pedal is depressed in a transition period of movement of the output piston by automatic control;
FIG. 8 is a diagram showing the operation states of the separation mechanism and the master cylinder in a transition period in which the clutch pedal is stepped back from the state of FIG. 7, in which the clutch pedal is depressed;
FIG. 9 is a diagram showing the operation states of the separation mechanism and the master cylinder when a system failure in which it becomes difficult to supply electric power to an electric motor and an electromagnetic switching valve occurs during normal traveling in which the clutch is connected and disconnected by an operation of the clutch pedal;
FIG. 10 is a diagram showing the operation states of the separation mechanism and the master cylinder in a case where a system failure in which it becomes difficult to supply electric power to the electromagnetic switching valve and the electric motor occurs during automatic control to move the output piston by an actuator; and
FIG. 11 is a diagram showing a configuration of a separation mechanism corresponding to another example of the invention.

### DETAILED DESCRIPTION OF EMBODIMENTS

Hereinafter, examples of the invention will be described in detail with reference to the drawings. In the following examples, the drawings are appropriately simplified or modified, and the dimensional ratios, shapes, and the like of the respective parts are not necessarily drawn accurately.

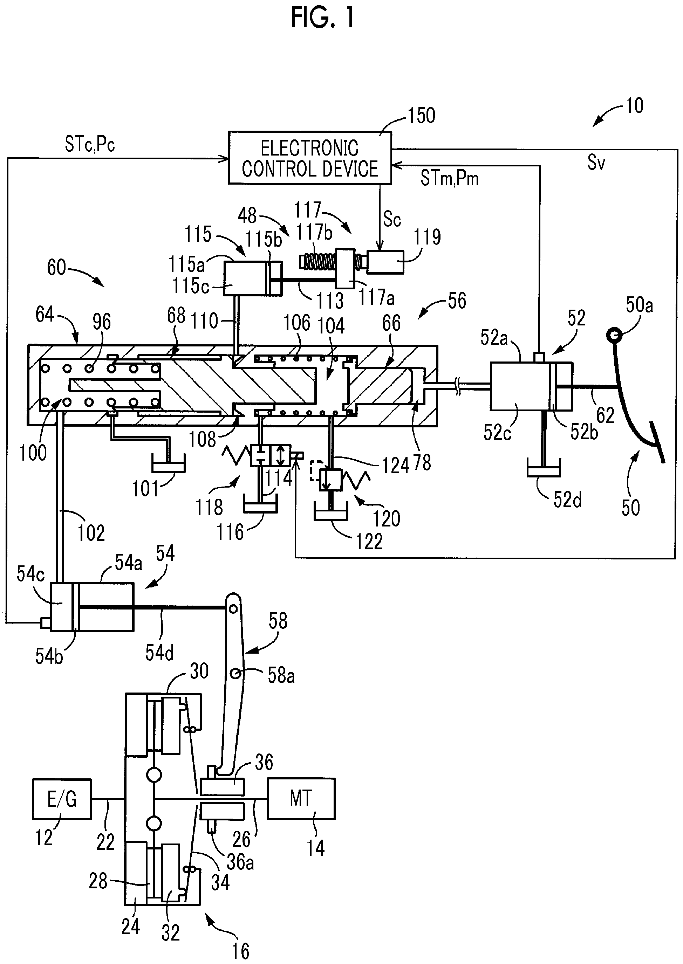

FIG. 1 shows the overall structure of a connecting and disconnecting device 10 of a clutch 16 to which the invention is applied. The connecting and disconnecting device 10 is a device for connecting and disconnecting the clutch 16 provided on a power transmission path between an engine 12 and a manual transmission 14.

The engine 12 is a driving force source that generates a driving force for vehicle traveling and is, for example, an internal combustion engine such as a gasoline engine or a diesel engine, which generates the driving force by combustion of fuel that is injected into a cylinder. The manual transmission 14 is provided in a power transmission path between the engine 12 and drive wheels and is composed of, for example, a well-known parallel two-shaft transmission.

The clutch 16 is in a connected state in a state where a clutch pedal 50 is not depressed, and at this time, the clutch 16 is in a power transmission state where the engine 12 and the manual transmission 14 are connected so as to be able to transmit power. On the other hand, when the clutch pedal 50 is depressed, the clutch 16 is switched to a slipping state or a disconnected state. The clutch 16 can also be automatically disconnected by an actuator 48 (described later).

The clutch 16 is configured to include a flywheel 24 mounted to an output shaft 22 of the engine 12, a clutch disc 28 mounted to a transmission input shaft 26 of the manual transmission 14, a clutch cover 30 connected to the flywheel 24, a pressure plate 32 accommodated in the clutch cover 30, a diaphragm spring 34 that generates a biasing force for pressing the clutch disc 28 against the flywheel 24, and a release bearing 36 disposed on the outer periphery side of the transmission input shaft 26 and movable relative to the transmission input shaft 26 in an axial direction.

In a state where the clutch 16 is connected, the pressure plate 32 and the clutch disc 28 are pressed against the flywheel 24 by the diaphragm spring 34. At this time, the flywheel 24 and the clutch disc 28 are in tight contact with each other. When the release bearing 36 is moved in the axial direction toward the engine 12 side from the state where the clutch 16 is connected, and an inner peripheral portion of the diaphragm spring 34 is pressed by the release bearing 36, the diaphragm spring 34 is deformed, and thus the biasing force for pressing the clutch disc 28 against the flywheel 24 is reduced. At this time, the clutch 16 is in the slipping state. When the release bearing 36 moves to a predetermined clutch disconnection position, the biasing force in which the diaphragm spring 34 presses the clutch disc 28 toward the flywheel 24 side becomes zero, and thus a state where the clutch disc 28 is separated from the flywheel 24 is created. At this time, the clutch 16 is disconnected.

The connecting and disconnecting device 10 is configured to include the clutch pedal 50 that is operated by a driver, a clutch master cylinder 52 (hereinafter referred to as a master cylinder 52) for converting a depressing force, with which the clutch pedal 50 is depressed, into hydraulic pressure, a clutch release cylinder 54 (hereinafter referred to as a clutch cylinder 54) to which the depressing force of the clutch pedal 50 is transmitted, a separation mechanism 56 that is provided between the master cylinder 52 and the clutch cylinder 54 and can connect and disconnect a depressing force transmission path between the master cylinder 52 and the clutch cylinder 54, a release fork 58 for moving the release bearing 36 according to the operation amount of the clutch cylinder 54, and the actuator 48 that is connected to the separation mechanism 56 so as to be able to transmit power and can operate the clutch cylinder 54 through the separation mechanism 56, that is, can connect and disconnect the clutch 16. A depressing force transmission mechanism 60 that transmits the depressing force, with which the clutch pedal 50 is depressed, to the clutch cylinder 54 is composed of the master cylinder 52 and the separation mechanism 56.

The clutch pedal 50 is depressed by the driver, thereby being pivotable with a support portion 50a as the center. The clutch pedal 50 and the master cylinder 52 are mechanically connected to each other through a connecting rod 62.

The master cylinder 52 is configured to include a cylindrical cylinder body 52a, a disk-shaped piston 52b slidably built in the cylinder body 52a, a hydraulic pressure chamber 52c that is formed so as to be surrounded by the cylinder body 52a and the piston 52b and has the interior filled with hydraulic oil, and a reservoir tank 52d for storing the hydraulic oil. The piston 52b and the clutch pedal 50 are mechanically connected to each other through the connecting rod 62, and when the clutch pedal 50 is depressed, the piston 52b moves in the cylinder body 52a according to the operation amount (stroke amount) of the clutch pedal 50. At this time, hydraulic pressure according to the depressing force of the clutch pedal 50 is generated in the hydraulic pressure chamber 52c.

The clutch cylinder 54 is configured to include a cylindrical cylinder body 54a, a disk-shaped piston 54b slidably built in the cylinder body 54a, a hydraulic pressure chamber 54c that is formed so as to be surrounded by the cylinder body 54a and the piston 54b and has the interior filled with hydraulic oil, and a rod 54d connected to the piston 54b. The tip of the rod 54d is in contact with one end of the release fork 58 formed in an elongated shape.

The release fork 58 is configured to be rotatable with a support portion 58a as the center, and a first end thereof in a longitudinal direction is in contact with the tip of the rod 54d and a second end is in contact with a flange portion 36a formed at the release bearing 36. In this way, when the piston 54b of the clutch cylinder 54 is moved in the cylinder body 54a by the hydraulic pressure of the hydraulic oil in the hydraulic pressure chamber 54c, the rod 54d moves in conjunction with the movement of the piston 54b, whereby the first end of the release fork 58, which is in contact with the tip of the rod 54d, is moved. At this time, the release fork 58 is rotated with the support portion 58a as the center, whereby the position of the second end of the release fork 58 is changed, and thus the release bearing 36 that is in contact with the second end of the release fork 58 is moved. Accordingly, the release fork 58 rotates according to the operation amount of the clutch cylinder 54, whereby the clutch 16 is switched between the connected state and the disconnected state.

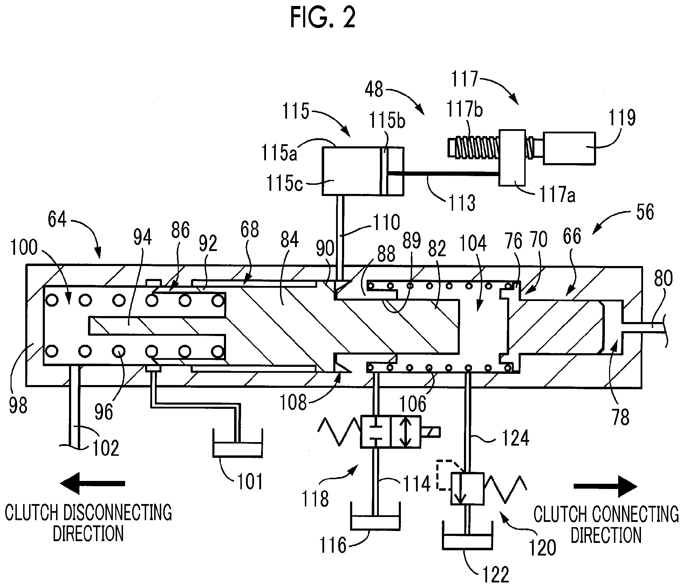

Next, the separation mechanism 56 that configures the depressing force transmission mechanism 60 and connects and disconnects the depressing force transmission path will be described. FIG. 2 is an enlarged view of the separation mechanism 56 of FIG. 1. FIG. 2 shows a state where depression of the clutch pedal 50 is released and the clutch 16 is connected. The separation mechanism 56 is configured to include a cylindrical cylinder body 64, and a pair of an input piston 66 and an output piston 68 accommodated in the cylinder body 64.

Each of the input piston 66 and the output piston 68 is disposed so as to be slidable on the inner wall surface of the cylinder body 64. In FIG. 2, the master cylinder 52 shown in FIG. 1 is disposed on the right side of the drawing, and the input piston 66 is disposed further on the master cylinder 52 side (the right side of the drawing) than the output piston 68 in the cylinder body 64. The output piston 68 is disposed on the side (the left side of the drawing) farther from the master cylinder 52 than the input piston 66.

A stepped portion 70 is formed on the inner wall surface of the cylinder body 64. In this way, the cylinder body 64 has different inner diameters with the stepped portion 70 of the cylinder body 64 as a boundary. Specifically, the inner diameter of the cylinder body 64 on the master cylinder 52 side with the stepped portion 70 as a boundary is formed so as to be smaller than the inner diameter of the cylinder body 64 on the side away from the master cylinder 52.

The depressing force from the clutch pedal 50 is input to the input piston 66 through the master cylinder 52. The input piston 66 is formed in a columnar shape and is slidably fitted to the inner wall surface formed in a small diameter, of the cylinder body 64. A flange portion 76 protruding outward in a radial direction is formed on the side of the input piston 66, which faces the output piston 68. The flange portion 76 can come into contact with a wall surface formed by the stepped portion 70 and perpendicular to a moving direction of the input piston 66. The flange portion 76 comes into contact with the wall surface formed by the stepped portion 70, whereby the movement of the input piston 66 toward the master cylinder 52 side is restricted. FIG. 2 shows a state where the flange portion 76 is in contact with the wall surface of the stepped portion 70.

Here, in the state shown in FIG. 2, in which the flange portion 76 of the input piston 66 is in contact with the wall surface of the stepped portion 70, the clutch 16 is in the connected state. That is, the position shown in FIG. 2, at which the flange portion 76 of the input piston 66 is in contact with the wall surface of the stepped portion 70, is a clutch connection position of the input piston 66, and the direction in which the input piston 66 moves toward the wall surface of the stepped portion 70 (the rightward direction in the drawing) is a clutch connecting direction. On the other hand, when the input piston 66 moves in a direction away from the wall surface of the stepped portion 70 during normal traveling in which the input piston 66 and the output piston 68 are connected so as to be able to transmit the depressing force, the clutch 16 is disconnected. Therefore, the direction in which the input piston 66 moves away from the wall surface of the stepped portion 70 (the leftward direction in the drawing) is a clutch disconnecting direction.

An input-side oil chamber 78 that is a space surrounded by the cylinder body 64 and the input piston 66 is formed on the clutch connecting direction side of the input piston 66. The input-side oil chamber 78 is connected to the hydraulic pressure chamber 52c of the master cylinder 52 through a connection pipe 80. Therefore, when the clutch pedal 50 is depressed, hydraulic pressure is generated in the hydraulic pressure chamber 52c of the master cylinder 52, and this hydraulic pressure is transmitted to the input-side oil chamber 78 via the connection pipe 80. The input piston 66 is pressed by the hydraulic pressure transmitted to the input-side oil chamber 78, whereby the input piston 66 is moved in the clutch disconnecting direction. The input piston 66 is constantly biased in the clutch connecting direction by a spring 106 accommodated in a first oil chamber 104 (described later). Accordingly, in a state where the clutch pedal 50 is not depressed, the input piston 66 is moved to the clutch connection position by the biasing force of the spring 106.

The output piston 68 is disposed so as to face the input piston 66 in the cylinder body 64. The output piston 68 includes a first columnar portion 82 having a columnar shape and facing the input piston 66, a second columnar portion 84 formed in a columnar shape having a larger diameter than the first columnar portion 82, and a spring accommodation portion 86 that accommodates a spring 96 (described later).

A piston supporting portion 88 that protrudes radially inward from the inner wall surface of the cylinder body 64 and supports the first columnar portion 82 of the output piston 68 so as to be slidable in a moving direction of the output piston 68 is formed in the cylinder body 64. The first columnar portion 82 is slidably fitted into a support hole 89 formed in the inner peripheral end portion of the piston supporting portion 88.

The second columnar portion 84 is connected to an end portion on the clutch disconnecting direction side of the first columnar portion 82 and is disposed further on the clutch disconnecting direction side than the piston supporting portion 88. A flange portion 90 extending outward in the radial direction is formed at an end portion on the clutch connecting direction side of the second columnar portion 84. The outer peripheral surface of the flange portion 90 is in sliding contact with the inner wall surface of the cylinder body 64. The flange portion 90 is adjacent to the piston supporting portion 88 in the moving direction of the output piston 68, and therefore, the flange portion 90 can come into contact with the piston supporting portion 88. FIG. 2 shows a state where the flange portion 90 of the output piston 68 and the piston supporting portion 88 are in contact with each other. As shown in FIG. 2, the flange portion 90 comes into contact with the piston supporting portion 88, whereby the movement of the output piston 68 in the clutch connecting direction is restricted. In a state where the flange portion 90 of the output piston 68 is in contact with the piston supporting portion 88, the clutch 16 is in the connected state. Therefore, the position at which the flange portion 90 of the output piston 68 is in contact with the piston supporting portion 88 is a clutch connection position of the output piston 68. The direction in which the flange portion 90 of the output piston 68 comes into contact with the piston supporting portion 88 (the rightward direction in the drawing) is a clutch connecting direction, and the direction in which the output piston 68 moves away from the piston supporting portion 88 (the leftward direction in the drawing) is a clutch disconnecting direction. That is, when the output piston 68 moves in the clutch connecting direction, the clutch 16 is connected, and when the output piston 68 moves in the clutch disconnecting direction, the clutch 16 is disconnected.

The spring accommodation portion 86 is configured to include a cylinder-shaped cylindrical portion 92 that is in slidable contact with the inner wall surface of the cylinder body 64, and a columnar protrusion portion 94 that protrudes in the clutch disconnecting direction from the center of the second columnar portion 84. An annular space is formed between the inner periphery of the cylindrical portion 92 and the outer periphery of the protrusion portion 94, and the spring 96 is accommodated in the space. A first end of the spring 96 is in contact with a bottom wall portion 98 of the cylinder body 64 and a second end of the spring 96 is in contact with the second columnar portion 84 and constantly biases the output piston 68 in the clutch connecting direction.

An output-side oil chamber 100 that is a space surrounded by the cylinder body 64 and the output piston 68 is formed on the clutch disconnecting direction side of the output piston 68. The output-side oil chamber 100 includes a space in which the spring 96 is accommodated. The output-side oil chamber 100 is filled with hydraulic oil and is connected to the hydraulic pressure chamber 54c of the clutch cylinder 54 through a connection pipe 102. Therefore, the hydraulic pressure of the hydraulic oil in the output-side oil chamber 100 (hereinafter referred to as clutch operating hydraulic pressure) is transmitted to the hydraulic pressure chamber 54c via the connection pipe 102, and the clutch cylinder 54 is operated by the clutch operating hydraulic pressure. In this manner, the output piston 68 is provided in order to output the clutch operating hydraulic pressure to the clutch cylinder 54.

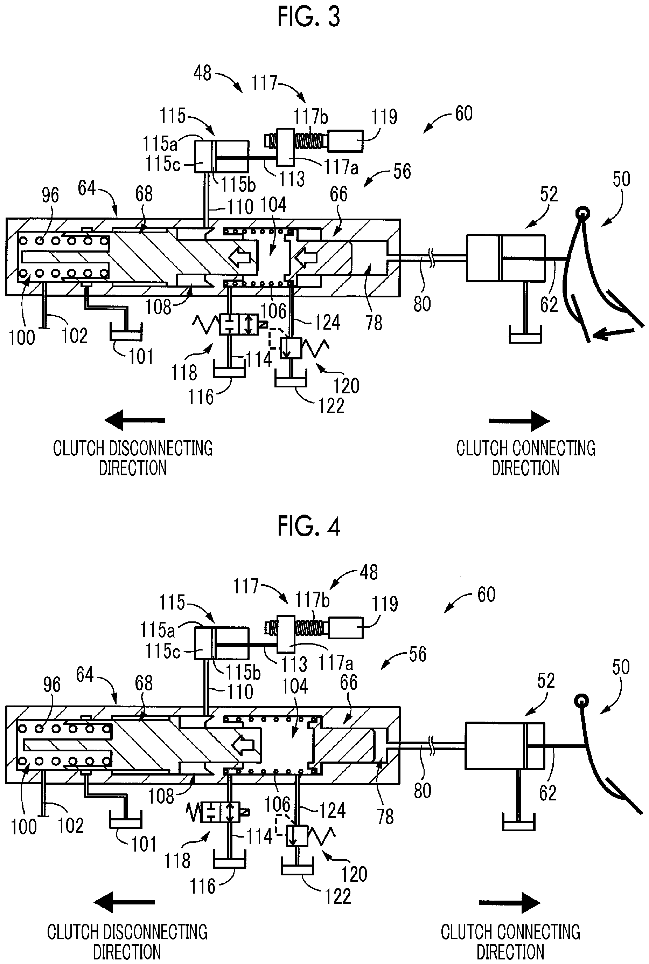

The output-side oil chamber 100 is connected to a reservoir tank 101 that is connected and disconnected according to the position of the output piston 68. In the state shown in FIG. 2, in which the output piston 68 is at the clutch connection position, the output-side oil chamber 100 and the reservoir tank 101 are connected to each other. At this time, the output-side oil chamber 100 is released, whereby hydraulic pressure is not generated in the output-side oil chamber 100. On the other hand, when the output piston 68 moves in the clutch disconnecting direction, the output-side oil chamber 100 and the reservoir tank 101 are disconnected from each other by the cylindrical portion 92 (refer to FIG. 3 and the like). At this time, the output-side oil chamber 100 is hermetically sealed, whereby the clutch operating hydraulic pressure according to the movement of the output piston 68 is generated in the output-side oil chamber 100.

The first oil chamber 104 filled with hydraulic oil is formed between the input piston 66 and the output piston 68 in the cylinder body 64. The first oil chamber 104 is a space surrounded by the cylinder body 64, the input piston 66, and the output piston 68. When the input piston 66 moves in the clutch disconnecting direction due to the depression of the clutch pedal 50 in a state where the first oil chamber 104 is hermetically sealed, the output piston 68 is pushed by the hydraulic oil in the first oil chamber 104, thereby moving in the clutch disconnecting direction. A design is made such that the first oil chamber 104 is always interposed between the input piston 66 and the output piston 68 and the input piston 66 and the output piston 68 do not come into direct contact with each other.

The spring 106 is provided in the first oil chamber 104. A first end of the spring 106 is in contact with the piston supporting portion 88 and a second end of the spring 106 is in contact with the flange portion 76 of the input piston 66. The spring 106 constantly biases the input piston 66 in the clutch connecting direction, that is, the direction in which the depression of the clutch pedal 50 is released.

A second oil chamber 108 adjacent to the flange portion 90 of the output piston 68 is formed in the cylinder body 64. The second oil chamber 108 is an annular space surrounded by the inner wall surface of the cylinder body 64, the output piston 68, and the piston supporting portion 88, and the interior thereof is filled with hydraulic oil. When the hydraulic oil is supplied to the second oil chamber 108, the output piston 68 is pressed by the hydraulic pressure of the hydraulic oil in the second oil chamber 108, and therefore, the output piston 68 is moved in the clutch disconnecting direction.

Next, the electric actuator 48 that is connected to the separation mechanism 56 configuring the depressing force transmission mechanism 60 so as to be able to transmit power and is configured so as to be able to connect and disconnect the clutch 16 through the separation mechanism 56 will be described. The actuator 48 is configured to include an electric motor 119, a screw transmission device 117 for converting rotary motion of the electric motor 119 into linear motion, a control cylinder 115 that is driven by the screw transmission device 117, and the second oil chamber 108 that is formed at a position adjacent to the output piston 68 and is supplied with hydraulic oil, thereby pressing the output piston 68 in the clutch disconnecting direction.

The second oil chamber 108 is connected to the control cylinder 115 through a connection pipe 110. The control cylinder 115 is configured to include a cylindrical cylinder body 115a, a disk-shaped piston 115b slidably built in the cylinder body 115a, a hydraulic pressure chamber 115c that is formed so as to be surrounded by the cylinder body 115a and the piston 115b and has the interior filled with hydraulic oil, and a reservoir tank (not shown). The piston 115b is connected to a nut member 117a (described later) of the screw transmission device 117 through a rod 113. The hydraulic pressure chamber 115c is connected to the second oil chamber 108 through the connection pipe 110, and therefore, the second oil chamber 108 is configured so as to be capable of receiving the hydraulic oil that is output from the control cylinder 115. The control cylinder 115 is an example of a hydraulic cylinder.

The screw transmission device 117 includes the nut member 117a connected to the rod 113, and a screw shaft 117b that is fitted into the nut member 117a. The screw shaft 117b is rotationally driven by the electric motor 119 connected to a first end thereof. When the electric motor 119 rotates, the screw shaft 117b also rotates, whereby the nut member 117a is moved in the axial direction of the screw shaft 117b. Since the nut member 117a is connected to the piston 115b of the control cylinder 115 through the rod 113, the piston 115b is moved in the axial direction of the screw shaft 117b in conjunction with the nut member 117a. When the piston 115b moves, hydraulic pressure is generated in the hydraulic pressure chamber 115c and the hydraulic pressure is transmitted to the second oil chamber 108 through the connection pipe 110, and therefore, the output piston 68 is pressed by the hydraulic pressure in the second oil chamber 108. Accordingly, by controlling the electric motor 119 in the transition period of depression of the clutch pedal 50, it is possible to apply a force in the clutch disconnecting direction to the output piston 68 to assist an operating force needed for the disconnection of the clutch 16. Even in a state where the clutch pedal 50 is not depressed, by moving the output piston 68 in the clutch disconnecting direction by driving the electric motor 119, it is also possible to automatically disconnect the clutch 16.

Here, the first oil chamber 104 is connected to a reservoir tank 116 through a connection pipe 114. An electromagnetic switching valve 118 capable of making and cutting off the connection between the first oil chamber 104 and the reservoir tank 116 is provided on the connection pipe 114. The electromagnetic switching valve 118 is a well-known technology, and therefore, detailed description regarding the structure and operation thereof is omitted. The electromagnetic switching valve 118 is an example of an electromagnetic valve.

When the electromagnetic switching valve 118 is closed, the first oil chamber 104 and the reservoir tank 116 are disconnected from each other, whereby the first oil chamber 104 becomes a hermetically sealed space. At this time, the depressing force is transmitted between the input piston 66 and the output piston 68 through the hydraulic oil in the first oil chamber 104.

When the electromagnetic switching valve 118 is opened, the first oil chamber 104 and the reservoir tank 116 are connected to each other through the electromagnetic switching valve 118. At this time, the first oil chamber 104 is released, whereby the transmission of the depressing force between the input piston 66 and the output piston 68 is interrupted. For example, even in a case where the clutch pedal 50 is depressed, whereby the input piston 66 is moved in the clutch disconnecting direction, the hydraulic oil in the first oil chamber 104 flows into the reservoir tank 116 side, and thus hydraulic pressure by the depression of the clutch pedal 50 is not generated in the first oil chamber 104. Therefore, the depressing force is not transmitted to the output piston 68. That is, in a state where the electromagnetic switching valve 118 is opened, the depressing force is not transmitted between the input piston 66 and the output piston 68 through the hydraulic oil in the first oil chamber 104 regardless of the positions and the moving speeds of the input piston 66 and the output piston 68. In this manner, the opening and closing of the electromagnetic switching valve 118 is switched, whereby the transmission state of the depressing force between the input piston 66 and the output piston 68 is switched. Accordingly, the depressing force transmission path of the depressing force transmission mechanism 60 is connected and disconnected by the separation mechanism 56.

As the electromagnetic switching valve 118, a so-called normally closed type in which an electromagnetic switching valve is closed in a state where it is not energized (that is, in a state where electric power is not supplied) is used. Therefore, in a state where the electromagnetic switching valve 118 is not energized, the first oil chamber 104 is hermetically sealed, and therefore, the depressing force can be transmitted between the input piston 66 and the output piston 68 through the hydraulic oil in the first oil chamber 104. At this time, it becomes possible to connect and disconnect the clutch 16 by the depression operation of the clutch pedal 50.

The first oil chamber 104 is connected to a reservoir tank 122 through a connection pipe 124. A relief valve 120 is provided on the connection pipe 124. That is, the first oil chamber 104 is connected to the reservoir tank 122 through the relief valve 120. The relief valve 120 is set so as to be opened in a case where hydraulic pressure larger than a hydraulic pressure release threshold value α set in advance is generated in the first oil chamber 104. That is, the relief valve 120 is set such that in a case where hydraulic pressure larger than the hydraulic pressure release threshold value α is generated in the first oil chamber 104, the first oil chamber 104 and the reservoir tank 122 are connected to each other through the relief valve 120, so that the hydraulic oil in the first oil chamber 104 flows into the reservoir tank 122. The hydraulic pressure release threshold value α is set to a value larger than the hydraulic pressure value of the first oil chamber 104 when the maximum reaction force of the clutch pedal 50 is generated. The maximum reaction force of the clutch pedal 50 is a value that is set in advance in design. The hydraulic pressure release threshold value α is set to a value equal to or lower than a pressure resistance value set in advance in design of hydraulic components configuring the separation mechanism 56 (that is, a value at which pressure resistance performance is secured).

Returning to FIG. 1, the electric motor 119 and the electromagnetic switching valve 118 are operated by a command signal (that is, a command current) that is output from an electronic control device 150. The electronic control device 150 is configured to include a so-called microcomputer provided with, for example, a central processing unit (CPU), a random access memory (RAM), a read only memory (ROM), an input/output interface, and the like, and the CPU controls the electric motor 119 and the electromagnetic switching valve 118 by performing signal processing according to a program stored in advance in the ROM while utilizing a temporary storage function of the RAM. The electronic control device 150 may be provided integrally with an electronic control device that controls the engine 12 and the like, or may be separately provided as a control device that exclusively controls the electric motor 119 and the electromagnetic switching valve 118.

Signals representing a stroke amount STm of the master cylinder 52 and hydraulic pressure Pm of the hydraulic pressure chamber 52c, signals representing a stroke amount STc of the clutch cylinder 54 and hydraulic pressure Pc of the hydraulic pressure chamber 54c, and the like are input to the electronic control device 150. The stroke amount STm of the master cylinder 52 interlocks with the clutch pedal 50 and the input piston 66, and therefore, the stroke amount STm of the master cylinder 52 can be read as the stroke amount of the clutch pedal 50 and the stroke amount of the input piston 66. The clutch cylinder 54 interlocks with the release bearing 36 and the output piston 68, and therefore, the stroke amount STc of the clutch cylinder 54 can be read as the stroke amount of the release bearing 36 and the stroke amount of the output piston 68. A command signal Sc for controlling the electric motor 119 and a switching signal Sv for switching the opening and closing of the electromagnetic switching valve 118 are output from the electronic control device 150.

In the connecting and disconnecting device 10 configured as described above, the connection and disconnection of the electromagnetic switching valve 118 are appropriately switched according to the traveling state of a vehicle by the electronic control device 150, whereby during traveling in which the clutch 16 is connected and disconnected by the operation of the clutch pedal 50 (hereinafter referred to as during normal traveling), in the transition period of depression of the clutch pedal 50, assistance by the actuator 48 (the electric motor 119) becomes possible and the clutch 16 can be automatically connected and disconnected by the driving of the actuator 48 (the electric motor 119). Hereinafter, the operation of the connecting and disconnecting device 10 will be described.

First, the operation of the connecting and disconnecting device 10 during the normal traveling in which the clutch 16 is connected and disconnected by the operation of the clutch pedal 50 will be described. FIG. 3 shows the operation states of the separation mechanism 56 and the master cylinder 52 during the normal traveling. The electronic control device 150 closes the electromagnetic switching valve 118 during the normal traveling. Since the electromagnetic switching valve 118 is a normally closed type, the electronic control device 150 cuts off the energization of the electromagnetic switching valve 118, whereby the electromagnetic switching valve 118 is closed, and thus the first oil chamber 104 is hermetically sealed. Therefore, the depressing force can be transmitted between the input piston 66 and the output piston 68 through the hydraulic oil in the first oil chamber 104.

In this state, when the clutch pedal 50 is depressed, hydraulic pressure is generated in the master cylinder 52, and the hydraulic pressure is transmitted to the input-side oil chamber 78. The input piston 66 moves in the clutch disconnecting direction due to the hydraulic pressure in the input-side oil chamber 78. Here, since the first oil chamber 104 is a hermetically sealed space, when the input piston 66 moves in the clutch disconnecting direction, the output piston 68 is also pressed in the clutch disconnecting direction by the hydraulic pressure of the hydraulic oil in the first oil chamber 104, whereby the output piston 68 moves in the clutch disconnecting direction. In this manner, during the normal traveling, the first oil chamber 104 is hermetically sealed, whereby the depressing force that is input from the input piston 66 side is transmitted to the output piston 68 through the hydraulic oil in the first oil chamber 104.

In the transition period of the movement of the output piston 68 due to the depression of the clutch pedal 50, the electronic control device 150 outputs a command signal for supplying hydraulic pressure for assisting in the depression of the clutch pedal 50 to the second oil chamber 108, to the electric motor 119. The electronic control device 150 stores, for example, a relationship map between the stroke amount STm of the master cylinder 52 (or the stroke amount STc of the clutch cylinder 54) and the hydraulic pressure in the second oil chamber 108, and determines the hydraulic pressure in the second oil chamber 108 corresponding to the assistance force by applying the stroke amount STm that is occasionally detected to the relationship map. The electronic control device 150 controls the electric motor 119 such that the hydraulic pressure in the second oil chamber 108 reaches a target hydraulic pressure determined based on the relationship map. For example, the hydraulic pressure in the second oil chamber 108 is occasionally detected, and feedback control for controlling the output (a controlled variable) of the electric motor 119 is executed based on the deviation between the determined target hydraulic pressure and the hydraulic pressure in the second oil chamber 108, which is occasionally detected. The relationship map is determined experimentally or in design in advance and is set to a value at which a good pedal reaction force can be obtained in the transition period of the depression of the clutch pedal 50. In this way, the output piston 68 is pressed by the hydraulic pressure in the second oil chamber 108, whereby a load that is applied to the driver in the transition period of the depression of the clutch pedal 50 is reduced.

The output piston 68 moves in the clutch disconnecting direction, whereby the hydraulic oil in the output-side oil chamber 100 flows into the hydraulic pressure chamber 54c of the clutch cylinder 54 through the connection pipe 102. Accordingly, the piston 54b and the rod 54d of the clutch cylinder 54 move in the clutch disconnecting direction in conjunction with the output piston 68, whereby the clutch 16 is disconnected. Even in the transition period in which the depression of the clutch pedal 50 is released from a state where the clutch 16 is disconnected by the depression of the clutch pedal 50, the electromagnetic switching valve 118 is closed, whereby the depressing force can be transmitted between the input piston 66 and the output piston 68 through the hydraulic oil in the first oil chamber 104. With respect to an operation in the transition period in which the depression is released from a state where the clutch pedal 50 is depressed, description is omitted.

Next, control to automatically connect and disconnect the clutch 16 by driving the actuator 48 (the electric motor 119) (hereinafter referred to as automatic control) will be described. FIG. 4 shows the operation states of the separation mechanism 56 and the master cylinder 52 during the automatic control. The automatic control to automatically disconnect the clutch 16 by driving the actuator 48 (the electric motor 119) during traveling is executed during coasting of the vehicle. The coasting is a traveling in which the vehicle travels due to inertia, and when the traveling resistance of the vehicle is reduced, a coasting travelable distance becomes long, which leads to an improvement in fuel economy. Therefore, the electronic control device 150 executes the automatic control to disconnect the clutch 16 during the coasting, thereby reducing traveling resistance due to dragging of the engine 12 or the like and lengthening the coasting travelable distance.

When the electronic control device 150 determines that a coasting travelable condition is satisfied, the electronic control device 150 opens the electromagnetic switching valve 118 by energizing the electromagnetic switching valve 118. Next, the electronic control device 150 outputs a command signal for operating the control cylinder 115 to move the output piston 68 in the clutch disconnecting direction, to the electric motor 119. The electronic control device 150 executes position control to control the rotational position of the electric motor 119 based on the stroke amount STc of the clutch cylinder 54 corresponding to the stroke amount of the output piston 68, such that the output piston 68 moves to the clutch disconnection position within a predetermined time from the point in time when the coasting travelable condition is satisfied. In this way, hydraulic oil is supplied from the control cylinder 115 to the second oil chamber 108, and thus the output piston 68 is moved in the clutch disconnecting direction. As establishment conditions that the coasting becomes possible, a plurality of conditions such as, for example, depression of an accelerator pedal being released and a vehicle speed being equal to or higher than a predetermined vehicle speed is set, and in a case where all of the establishment conditions are satisfied, a determination that the coasting condition is satisfied is made.

In the transition period in which the actuator 48 (the electric motor 119) is driven to move the output piston 68 in the clutch disconnecting direction, the electromagnetic switching valve 118 is opened, whereby the first oil chamber 104 is connected to the reservoir tank 116 through the electromagnetic switching valve 118. Therefore, the transmission of a force between the input piston 66 and the output piston 68 is interrupted, and the output piston 68 can be moved by the actuator 48 without transmitting a force to the input piston 66. The hydraulic oil is supplied from the control cylinder 115 to the second oil chamber 108, whereby the output piston 68 moves in the clutch disconnecting direction due to the hydraulic oil that is supplied to the second oil chamber 108. In this way, clutch operating hydraulic pressure is generated in the output-side oil chamber 100, and this clutch operating hydraulic pressure is transmitted to the hydraulic pressure chamber 54c of the clutch cylinder 54 via the connection pipe 102, whereby the piston 54b and the rod 54d of the clutch cylinder 54 move to the clutch disconnection position in conjunction with the output piston 68, and therefore, the clutch 16 is disconnected.

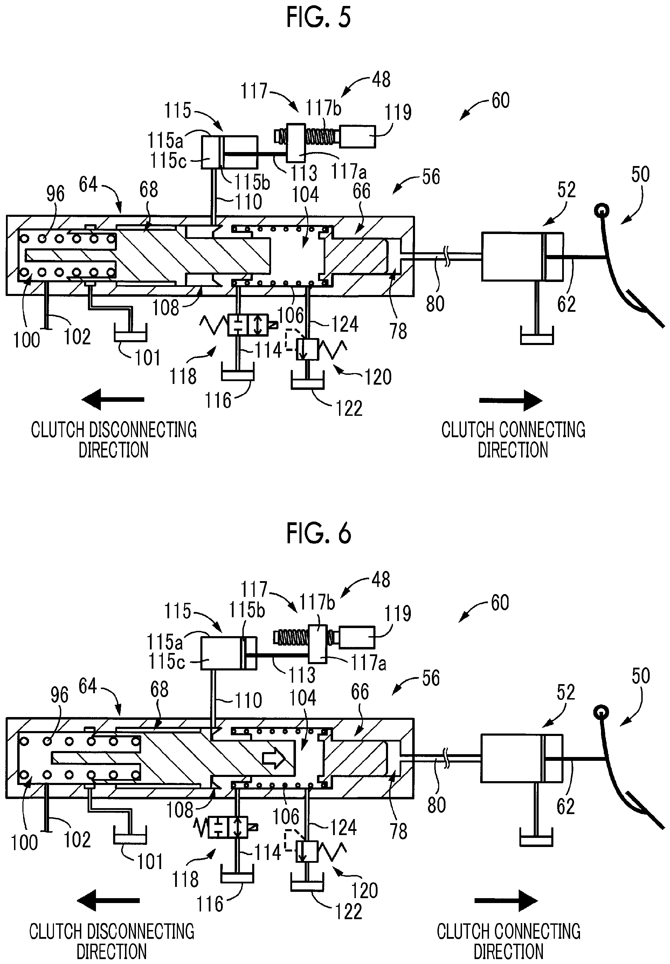

FIG. 5 shows the operation states of the separation mechanism 56 and the master cylinder 52 when the output piston 68 has moved to the clutch disconnection position where the clutch 16 is disconnected, by the automatic control. When the output piston 68 is moved to the clutch disconnection position where the clutch 16 is disconnected, by the actuator 48, the electronic control device 150 cuts off the energization of the electromagnetic switching valve 118 and then cuts off the energization of the electric motor 119. In this way, the first oil chamber 104 and the reservoir tank 116 are disconnected from each other by the electromagnetic switching valve 118 and the first oil chamber 104 is hermetically sealed in an oil-tight manner, and therefore, the movement of the output piston 68 in the clutch connecting direction is blocked by the hydraulic oil in the first oil chamber 104. That is, the first oil chamber 104 is hermetically sealed, whereby the first oil chamber 104 functions as a self-locking mechanism that holds the output piston 68, and thus even though the energization of the electric motor 119 is cut off, the output piston 68 is held at the clutch disconnection position.

FIG. 6 shows the operation states of the separation mechanism 56 and the master cylinder 52 when the coasting establishment conditions set in advance are not satisfied from the state shown in FIG. 5, in which the output piston 68 is held at the clutch disconnection position. In a state where the output piston 68 is held at the clutch disconnection position by the automatic control, in a case where the coasting establishment conditions set in advance are not satisfied, the electronic control device 150 opens the electromagnetic switching valve 118 by energizing the electromagnetic switching valve 118. The electromagnetic switching valve 118 is opened, whereby the first oil chamber 104 is connected to the reservoir tank 116, and therefore, the movement of the output piston 68 in the clutch connecting direction is permitted. Therefore, the output piston 68 moves to the clutch connection position due to the biasing force of the spring 96, whereby the clutch 16 is connected. When the output piston 68 has moved to the clutch connection position, the electronic control device 150 cuts off the energization of the electromagnetic switching valve 118, whereby the electromagnetic switching valve 118 is closed, and thus switching to a state where normal traveling is possible is performed.

Here, it is conceivable that the clutch pedal 50 is stepped on by the driver in the transition period of the movement of the output piston 68 by the actuator 48 (hereinafter, the operation in which the clutch pedal 50 is depressed in the transition period of the movement of the output piston 68 by automatic control is referred to as an interrupt operation). At this time, when a state is created where the depressing force can be transmitted between the input piston 66 and the output piston 68, a force according to the relative position and the relative speed between the input piston 66 and the output piston 68 is transmitted to the input piston 66 through the hydraulic oil in the first oil chamber 104, whereby the pedal reaction force in the transition period of depression of the clutch pedal 50 deviates from a pedal reaction force based on the operation amount of the clutch pedal 50, which is set in advance, and thus there is a possibility that the driver may feel a sense of discomfort.

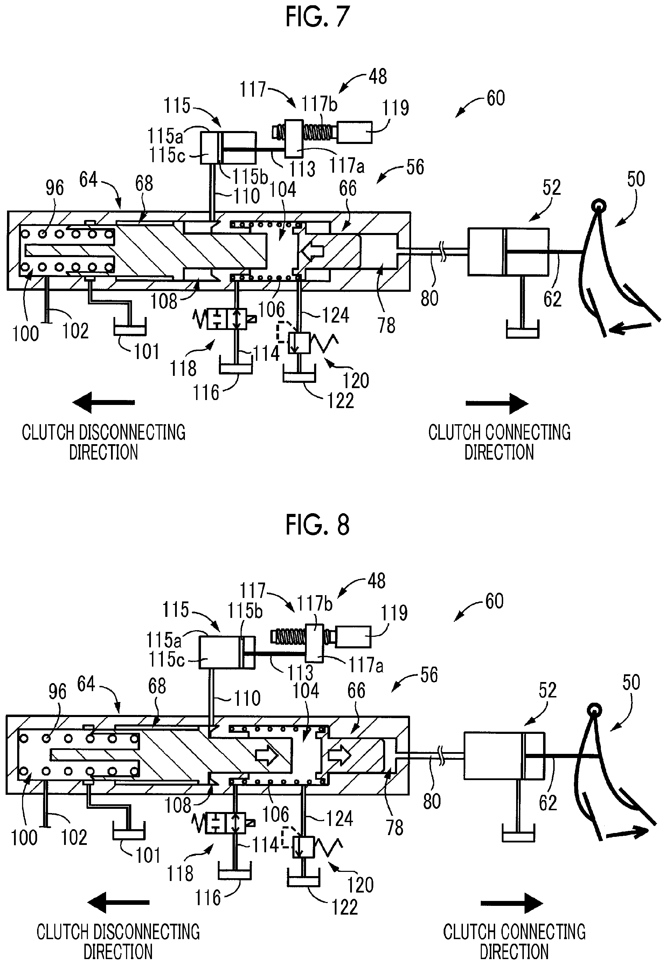

In contrast, when the interrupt operation is performed during the automatic control, the electronic control device 150 maintains the energization of the electromagnetic switching valve 118 and opens the electromagnetic switching valve 118. FIG. 7 shows the operation states of the separation mechanism 56 and the master cylinder 52 when the clutch pedal 50 is depressed in the transition period of the movement of the output piston 68 by the actuator 48 (the electric motor 119). The energization of the electromagnetic switching valve 118 is maintained, whereby the opened state of the electromagnetic switching valve 118 is continued and the transmission of the depressing force between the input piston 66 and the output piston 68 is interrupted, and therefore, a force is not transmitted to the input piston 66 through the hydraulic oil of the first oil chamber 104, regardless of the relative position and the relative speed between the input piston 66 and the output piston 68. Accordingly, even in a case where the interrupt operation is performed in the transition period of the movement of the output piston 68 by the actuator 48, the pedal reaction force of the clutch pedal 50 is restrained from deviating from the pedal reaction force based on the operation amount of the clutch pedal 50, which is set in advance. In the example of the invention, the pedal reaction force based on the operation amount of the clutch pedal 50 is generated by the elastic restoring force of the spring 106 that biases the input piston 66 in the clutch connecting direction. Therefore, even during the interrupt operation, the pedal reaction force based on the characteristic of the spring 106 is obtained.

FIG. 8 shows the operation states of the separation mechanism 56 and the master cylinder 52 in a transition period in which the clutch pedal 50 is stepped back from a state where the clutch pedal 50 is depressed, during the automatic control in FIG. 7. Also at this time, the electromagnetic switching valve 118 is energized, whereby the electromagnetic switching valve 118 is opened. The electromagnetic switching valve 118 is opened, whereby the output piston 68 is not held by the hydraulic oil in the first oil chamber 104, and therefore, the output piston 68 moves in the clutch connecting direction due to the biasing force of the spring 96. The first oil chamber 104 is connected to the reservoir tank 116 through the electromagnetic switching valve 118 in the transition period in which the output piston 68 moves in the clutch connecting direction, and therefore, a force according to the movement of the output piston 68 is not transmitted to the input piston 66. Therefore, even in the transition period in which the clutch pedal 50 is stepped back, the pedal reaction force is restrained from deviating from the pedal reaction force set in advance. When the depression of the clutch pedal 50 is released, the electronic control device 150 cuts off the energization of the electromagnetic switching valve 118, whereby the electromagnetic switching valve 118 is closed, so that the normal traveling becomes possible.

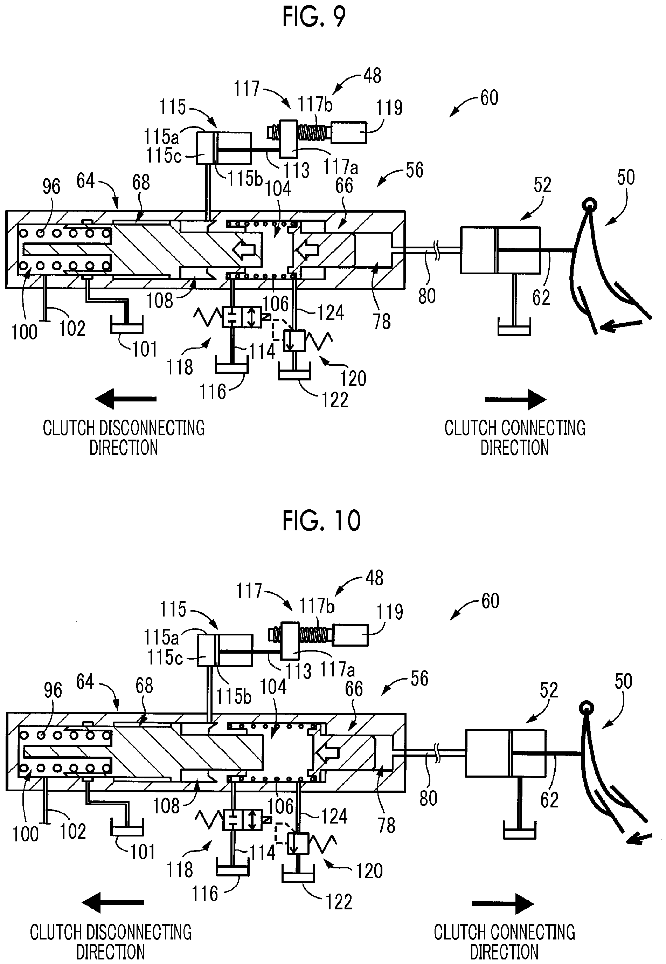

FIG. 9 shows the operation states of the separation mechanism 56 and the master cylinder 52 when a system failure in which it becomes difficult to supply electric power to the electric motor 119 and the electromagnetic switching valve 118 occurs during the normal traveling in which the clutch 16 is connected and disconnected by the operation of the clutch pedal 50. Here, the normally closed type is used as the electromagnetic switching valve 118, and therefore, in a case where the system failure occurs, the electromagnetic switching valve 118 is closed because the electromagnetic switching valve 118 is not energized. Therefore, the depressing force can be transmitted between the input piston 66 and the output piston 68 through the hydraulic oil in the first oil chamber 104, and thus the clutch 16 can be connected and disconnected by the operation of the clutch pedal 50. Therefore, the traveling can be continued. At this time, electric power is not supplied to the electric motor 119 as well, and therefore, the assistance of the power by the actuator 48 is stopped, and accordingly, the pedal reaction force of the clutch pedal 50 is increased compared to that in the normal state.

FIG. 10 shows the operation states of the separation mechanism 56 and the master cylinder 52 in a case where a system failure in which it becomes difficult to supply electric power to the electromagnetic switching valve 118 and the electric motor 119 occurs during the automatic control to move the output piston 68 by the actuator 48 (the electric motor 119). Even during the automatic control, in a case where a system failure occurs, the energization of the electromagnetic switching valve 118 is cut off, whereby the electromagnetic switching valve 118 is closed, so that the first oil chamber 104 is hermetically sealed in an oil-tight manner. In this way, a self-locked state is created where the output piston 68 is held at the position (in FIG. 10, the clutch disconnection position) at the point in time when the system failure has occurred by the first oil chamber 104, and therefore, unintentional sudden engagement of the clutch 16 due to a system failure can be restrained.

As described above, in a case where the system failure occurs during the automatic control, the electromagnetic switching valve 118 is closed, whereby the self-locked state is created where the output piston 68 is held at the position at the point in time when the system failure has occurred. However, when the output piston 68 does not move, it becomes difficult to continue traveling (traveling in a limp home mode). In contrast, for the purpose of continuing traveling, the first oil chamber 104 is connected to the reservoir tank 122 through the relief valve 120. The relief valve 120 is set so as to be opened when the hydraulic pressure in the first oil chamber 104 becomes equal to or higher than the hydraulic pressure release threshold value a. The hydraulic pressure release threshold value α is set to a value larger than the hydraulic pressure value of when the maximum reaction force of the clutch pedal 50, which is set in advance in design, is generated. Therefore, the driver strongly depresses the clutch pedal 50 with a depressing force larger than the depressing force corresponding to the hydraulic pressure release threshold value a, whereby the relief valve 120 is opened, and thus the first oil chamber 104 is released. At this time, the self-locking state of the output piston 68 is released, and thus the output piston 68 becomes movable, and the balance of the amount of oil in the separation mechanism 56 is adjusted to the normal state. In this manner, although there is no assistance of the power by the actuator 48, the clutch 16 can be connected and disconnected by the operation of the clutch pedal 50 by the driver, and therefore, the traveling (traveling in a limp home mode) of the vehicle becomes possible.

The hydraulic pressure release threshold value α of the relief valve 120 is set to a value equal to or lower than the pressure resistance value set in advance in design, of the hydraulic components configuring the separation mechanism 56. For this reason, for example, in a case where a system failure occurs during the normal traveling shown in FIG. 9, even in a case where an excessive hydraulic pressure is generated in the first oil chamber 104, the relief valve 120 is opened, whereby the hydraulic pressure in the first oil chamber 104 is lowered. Therefore, it is possible to protect the hydraulic components from the excessive hydraulic pressure, and it is possible to restrain the connection and disconnection of the clutch 16 from becoming difficult due to a failure of the hydraulic component or to restrain oil leakage of the hydraulic component, or the like.

As described above, according to the example of the invention, by switching the connection and disconnection between the first oil chamber 104 and the reservoir tank 116 by the electromagnetic switching valve 118, it becomes possible to switch the transmission of the depressing force between the input piston 66 and the output piston 68. For example, in the transition period of depression of the clutch pedal 50, the first oil chamber 104 and the reservoir tank 116 are disconnected from each other by the electromagnetic switching valve 118, whereby the first oil chamber 104 is hermetically sealed, and thus the depressing force can be transmitted between the input piston 66 and the output piston 68 through the hydraulic oil in the first oil chamber 104. In this way, the depressing force of the clutch pedal 50 is transmitted to the output piston 68 through the input piston 66 and the first oil chamber 104. In the transition period of depression of the clutch pedal 50, the power of the actuator 48 is transmitted to the output piston 68, whereby it is possible to assist in the connection and disconnection of the clutch 16 by the actuator 48. In the transition period of the connection and disconnection of the clutch 16 by the actuator 48, the first oil chamber 104 and the reservoir tank 116 are connected to each other by the electromagnetic switching valve 118, whereby the first oil chamber 104 is released, and thus the transmission of the depressing force between the input piston 66 and the output piston 68 is interrupted. Therefore, it is possible to connect and disconnect the clutch 16 by moving the output piston 68 by the actuator 48 without affecting the input piston 66. In the transition period in which the output piston 68 is moved by the actuator 48, the transmission of the depressing force between the input piston 66 and the output piston 68 is interrupted, and therefore, even in a case where the clutch pedal 50 is depressed in the transition period in which the output piston 68 is moved by the actuator 48, a change in the pedal reaction force of the clutch pedal 50 is restrained.

According to the example of the invention, when the output piston 68 moves to the disconnection position of the clutch 16 by the actuator 48, the first oil chamber 104 and the reservoir tank 116 are disconnected from each other by the electromagnetic switching valve 118, and therefore, the first oil chamber 104 is hermetically sealed, and thus even in a state where the energization of the electric motor 119 is cut off, the output piston 68 can be held at the disconnection position of the clutch 16. The electromagnetic switching valve 118 is of a normally closed type, and therefore, in a case where a system failure in which electric power is not supplied to the electric motor 119 and the electromagnetic switching valve 118 occurs in the transition period of depression of the clutch pedal 50, the electromagnetic switching valve 118 is closed, and thus the first oil chamber 104 and the reservoir tank 116 are disconnected from each other. Therefore, in a case where a system failure occurs in the transition period of depression of the clutch pedal 50, although the assistance of the power by the actuator 48 is stopped, traveling by the operation of the clutch pedal 50 becomes possible. Even in a case where a system failure occurs during the movement of the output piston 68 by the actuator 48, the electromagnetic switching valve 118 is closed, whereby the output piston 68 is locked by the hydraulic oil in the first oil chamber 104. Therefore, it is possible to restrain sudden engagement of the clutch 16 due to the system failure. When a system failure occurs in the transition period in which the output piston 68 is moved by the actuator 48, in a case where the first oil chamber 104 and the reservoir tank 116 are disconnected from each other by the electromagnetic switching valve 118, since the hydraulic oil in the first oil chamber 104 flows into the reservoir tank 122 through the relief valve 120 by strongly depressing the clutch pedal 50 such that hydraulic pressure larger than the hydraulic pressure value of when the maximum reaction force of the clutch pedal 50 is generated is generated, it is possible to release the lock of the output piston 68.

Next, another example of the invention will be described. In the following description, the parts common to those in the example of the invention described above are denoted by the same reference numerals and description thereof is omitted.

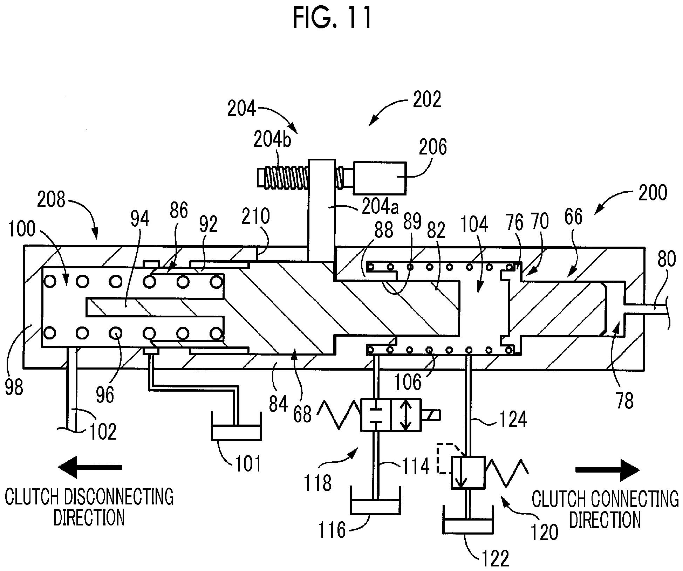

FIG. 11 is a diagram showing a configuration of a separation mechanism 200 corresponding to another example of the invention. An actuator 202 in another example of the invention is composed of a screw transmission device 204 and an electric motor 206. Hereinafter, the structure of the actuator 202 in another example of the invention will be described. Since configurations other than the actuator 202 are basically the same as those in the example of the invention described above, description thereof is omitted.

The actuator 202 is configured to include the screw transmission device 204 for converting rotary motion into linear motion, and the electric motor 206 that applies rotational torque to the screw transmission device 204.

The screw transmission device 204 is configured to include a nut member 204a connected to the output piston 68, and a screw shaft 204b that is fitted into the nut member 204a. One end of the screw shaft 204b is connected to the electric motor 206. Therefore, when the electric motor 206 rotates, the screw shaft 204b also rotates integrally.

A cylinder body 208 configuring a separation mechanism 200 is formed in a cylindrical shape, and a cutout 210 that makes the inside and the outside of the cylinder body 208 communicate with each other is formed in a part of the cylinder body 208 in the circumferential direction. The nut member 204a is connected to the output piston 68 through the cutout 210. The nut member 204a is movable in a gap that is formed by the cutout 210. As described above, the nut member 204a of the screw transmission device 204 is connected to the output piston 68, whereby the rotary motion of the electric motor 206 is converted into the linear motion of the nut member 204a in the axial direction of the screw shaft 204b, and thus the output piston 68 can be moved by the electric motor 206. The width of the cutout 210 (that is, the width of the gap) in the movement direction of the output piston 68 is set to a value that allows the output piston 68 to move between the clutch connection position and the clutch disconnection position. Therefore, by controlling the electric motor 206, it is possible to move the output piston 68 between the clutch connection position and the clutch disconnection position. Since the specific operation of the actuator 202 is basically the same as that in the example of the invention described above, description thereof is omitted.

As in another example of the invention, even though the actuator 202 is composed of the screw transmission device 204 and the electric motor 206 and moves the output piston 68 without the interposition of a hydraulic cylinder, it is possible to obtain the same effect as in the example of the invention described above. A hydraulic cylinder and an oil chamber are not needed, and therefore, the structure is also simplified.

The examples of the invention have been described in detail above based on the drawings. However, the invention is also applied in other aspects.

For example, in the example of the invention described above, the actuator 48 moves the output piston 68 by the hydraulic pressure of the hydraulic oil, which is generated in the control cylinder 115 and supplied to the second oil chamber 108. However, as long as it is an actuator that can move the output piston 68, it is not necessarily limited thereto. For example, a configuration may be made in which an electromagnetic type pressure regulating valve that controls the hydraulic pressure in the second oil chamber 108 with the hydraulic pressure of hydraulic oil that is discharged from an oil pump that is driven by the engine 12 or the like as a base pressure is provided and the hydraulic pressure in the second oil chamber 108 is controlled by the pressure regulating valve, whereby the output piston 68 is moved. Alternatively, the output piston 68 may be moved by hydraulic oil that is discharged from an electric oil pump.

In the examples of the invention described above, the screw transmission devices 117, 204 are composed of the nut members 117a, 204a and the screw shafts 117b, 204b. However, a screw transmission device can be appropriately applied as long as it is a mechanism for converting rotary motion into linear motion. For example, the screw transmission device may be composed of a ball screw, a worm gear, or the like.

In the examples of the invention described above, the hydraulic pressure release threshold value α of the relief valve 120 is set to a value equal to or lower than the pressure resistance value that is set in design of the hydraulic components of the separation mechanism 56. However, in a case where there is a margin in the strength of the hydraulic components, the pressure resistance value may not be taken into account.

In the example of the invention described above, the master cylinder 52 is provided between the separation mechanism 56 and the clutch pedal 50. However, the input piston 66 may be directly moved by the clutch pedal 50.

In the examples of the invention described above, as the electromagnetic switching valve 118, a normally closed type that is closed in a state of being not energized is used. However, it is not necessarily limited to the normally closed type. That is, a normally open type that is opened in a state of being not energized may be used.

In the examples of the invention described above, a plurality of reservoir tanks 52d, 101, 116, 122 is used. However, it may be composed of a common reservoir tank.

In the examples of the invention described above, the first oil chamber 104 is connected to the reservoir tank 122 through the relief valve 120. However, the relief valve 120 and the reservoir tank 122 are effective in a case where a system failure occurs during automatic control, and therefore these may be omitted.

The above is merely one embodiment, and the invention can be implemented in modes with various modifications or improvements added thereto based on the knowledge of those skilled in the art.

## Claims

1. A connecting and disconnecting device (10) of a clutch (16), the connecting and disconnecting device (10) comprising:
a clutch pedal (50) configured to be operated by a driver;
a clutch cylinder (54);
a depressing force transmission mechanism (60) configured to transmit a depressing force, with which the clutch pedal (50) is depressed, to the clutch cylinder (54); and
an actuator (48; 202) configured to generate power for connecting and disconnecting the clutch (16) through the depressing force transmission mechanism (60), wherein:
the depressing force transmission mechanism (60) includes a separation mechanism (56; 200) that connects and disconnects a depressing force transmission path of the depressing force transmission mechanism (60);
the separation mechanism (56; 200) includes
an input piston (66) to which the depressing force from the clutch pedal (50) is input,
an output piston (68) that outputs a clutch operating hydraulic pressure to the clutch cylinder (54),
a first oil chamber (104) provided between the input piston (66) and the output piston (68), and
an electromagnetic valve (118) provided to make a connection or disconnection between the first oil chamber (104) and a reservoir tank (116) connected to the first oil chamber (104); and
the actuator (48; 202) is connected to transmit power to the output piston (68) of the separation mechanism (56; 200).

2. The connecting and disconnecting device (10) according to claim 1, further comprising an electronic control unit (150) configured to control the actuator (48; 202) and the electromagnetic valve (118),
wherein the electronic control unit (150) is configured to control the electromagnetic valve (118) such that the first oil chamber (104) and the reservoir tank (116) are connected to each other in a transition period in which the output piston (68) is moved by controlling the actuator (48; 202).

3. The connecting and disconnecting device (10) according to claim 2, wherein:
the actuator (48; 202) includes an electric actuator (48; 202); and
the electronic control unit (150) is configured to control the electromagnetic valve (118) such that the first oil chamber (104) and the reservoir tank (116) are disconnected from each other in a case where the output piston (68) has moved to a disconnection position of the clutch (16) by controlling the actuator (48; 202).

4. The connecting and disconnecting device (10) according to claim 3, wherein the electromagnetic valve (118) is a normally closed electromagnetic valve.

5. The connecting and disconnecting device (10) according to any one of claims 1 to 4, wherein:
the first oil chamber (104) is connected to a reservoir tank (122) through a relief valve (120); and
the relief valve (120) is configured to connect the first oil chamber (104) and the reservoir tank (122) to each other in a case where hydraulic pressure larger than a hydraulic pressure value of when a maximum reaction force of the clutch pedal (50) is generated is generated in the first oil chamber (104).

6. The connecting and disconnecting device (10) according to any one of claims 1 to 5, wherein:
the actuator (48) includes an electric motor (119), a screw transmission device (117), a hydraulic cylinder (115), and a second oil chamber (108);
the screw transmission device (117) is configured to convert rotary motion of the electric motor (119) into linear motion;
the screw transmission device (117) is connected to drive the hydraulic cylinder (115);
the second oil chamber (108) is disposed at a position adjacent to the output piston (68) to press the output piston (68) in a disconnecting direction of the clutch (16) by hydraulic oil that is supplied to the second oil chamber (108); and
the second oil chamber (108) is configured such that hydraulic oil that is discharged from the hydraulic cylinder (115) flows into the second oil chamber (108).

7. The connecting and disconnecting device (10) according to any one of claims 1 to 5, wherein:
the actuator (202) includes an electric motor (206) and a screw transmission device (204);
the screw transmission device (204) is configured to convert rotary motion of the electric motor (206) into linear motion; and
the screw transmission device (204) is connected to the output piston (68) to transmit power to the output piston (68).

8. The connecting and disconnecting device (10) according to any one of claims 1 to 7, wherein a spring (106) that biases the input piston (66) in a direction in which depression of the clutch pedal (50) is released is disposed in the first oil chamber (104).
